# EUROPEAN PATENT APPLICATION

(11) **EP 3 725 198 A1**
(43) Date of publication of application: **21.10.2020**
(21) Application number: 19170505.2
(22) Date of filing: 23.04.2019
(51) Int. Cl.: A47J 44/00, A47J 43/044, A47J 43/046, A47J 27/14, A47J 27/00, A47J 36/32

(54) **KITCHEN MACHINE WITH AUTOMATICALLY OPERATED DISPENSING MEANS**

(30) Priority: 18.04.2019 PT 2019115464
(71) Applicant: Modelo Continente Hipermercados, S.A., 4464-503 Senhora da Hora (PT)
(72) Inventor: FARIA ROCHA, Duarte Nuno, 3800-423 AVEIRO (PT)
(74) Representative: do Nascimento Gomes, Rui

(57) **Abstract**

The present invention is enclosed in the area of kitchen machines, in particular kitchen machines which are electrically ran/operated. It is an object of the present invention a kitchen machine which is electrically ran and comprises i) a mixing cup, ii) mixing means provided in the mixing cup and iii) dispensing means comprising a container suitable to contain food supplies, wherein food supplies contained within the container are dispensable to the inside of the mixing cup under a dispensing command received by the kitchen machine. The inclusion of the controllable dispensing means in a kitchen machine provides for on-demand and/or remote initiation of a cooking procedure. Until the receipt of a dispensing command by the kitchen machine, the food supplies remain stored inside the container. Only after such command is received in the machine are the food supplies provided to the inside of the mixing cup, for subsequent preparation.

## Description

### FIELD OF THE INVENTION

The present invention is enclosed in the area of kitchen machines, in particular kitchen machines which are electrically ran/operated, typically comprising a mixing cup in which automatic mixing actions are performed and operating with automatic cooking programs.

### PRIOR ART

Kitchen machine solutions comprising a mixing cup in which automatic mixing actions are performed and operating with automatic cooking programs are known in the art, such as the case of patent application EP3117750. Furthermore, such patent application discloses a kitchen machine which provides mixing and heating of food supplies placed by a user within the mixing cup, and provides several controllable parameters, such as the operation speed of the engine that provides rotation of the mixer, its direction of rotation or the heating temperature of the base of the mixing cup.

Despite the practical functionalities provided by such solution, it requires, as do all solutions known in the art, the presence of a user that initiates the operation of the machine.

With the existing demand of less time required for a user to operate a kitchen machine, a need exists for a higher independence provided by such devices.

However, as in the case of such solution, none of the kitchen machines known in the art provides for the automatic and/or on demand initiation of its operation.

The present solution innovatively solves such issues.

### SUMMARY OF THE INVENTION

It is an object of the present invention a kitchen machine which is electrically ran and comprises i) a mixing cup, ii) mixing means provided in the mixing cup, iii) at least one container suitable to contain food supplies and iv) dispensing means, the dispensing means and the mixing cup being such that the food supplies contained within the container are dispensable to the inside of the mixing cup under a dispensing command received by the kitchen machine. The inclusion of the controllable dispensing means in a kitchen machine provides for on-demand and/or remote initiation of a cooking procedure. Until the receipt of a dispensing command by the kitchen machine, the food supplies remain stored inside the container. Only after such command is received in the machine are the food supplies provided to the inside of the mixing cup, for subsequent preparation, by means of the dispensing action of the dispensing means. Preferably, the machine comprises more than one container. The issue of an on-demand initiation of a cooking procedure is even more relevant in such case, namely where each container may have a different food supply. In particular, the present invention is particularly relevant for a cooking program may only be useful where the mixing of ingredients - the food supplies - occurs at the time in which the actual cooking procedure is to be initiated.

Advantageously, the kitchen machine is further configured to, subsequently to the dispensing of food supplies from a container into the mixing cup, initiate a cooking program, preferably such cooking program comprising activation of the mixing means and/or heating means comprised by the kitchen machine for predefined periods of time. With the automatic initiation of a cooking program subsequently to the dispensing command and the actual dispensing, a cooking procedure is initiated (with the dispensing) and able to be performed and finished (with the cooking program).

The kitchen machine may further comprise a base structure to which the mixing cup is attachable, such base structure comprising motion transmitting means which, when the mixing cup is attached to the base, are able to provide motion to the mixing means. Typically, such motion transmitting means consist of a motor, preferably an electrical motor which provides velocity control.

It is also an object of the present invention a method for automating a cooking program in a kitchen machine wherein it is implemented by the kitchen machine of the present invention, in any of described embodiments of the kitchen machine, and comprising the steps of:
- issuing a dispensing command to the dispensing means, preferably the container of such dispensing means containing food supplies,
- under receipt of such command in the kitchen machine, dispensing, by the dispensing means, of the food supplies contained in the container into the mixing cup, through the outlet of the dispensing means and the opening of the mixing cup,
- initiating a cooking program in the kitchen machine, preferably such cooking program comprising activation of the mixing means and/or the heating means comprised by the mixing cup, for predefined periods of time.

Such method provides for the on-demand and/or remote initiation of a cooking procedure/program in a kitchen machine, in which the container is able to be previously prepared with food supplies. Preferably, the kitchen machine comprises more than one container, each container being able to be provided with a different food supply. As referred above for the kitchen machine, the issue of on-demand initiation of a cooking procedure is even more relevant in such case. The method of the present invention may be implemented by the kitchen machine of the present invention, in any of the described embodiments of such machine.

### DESCRIPTION OF FIGURES

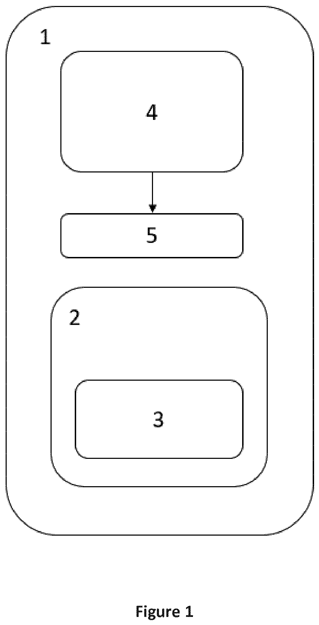

Figure 1 - representation of an embodiment of the kitchen machine with automatically operated dispensing means developed, wherein the reference signs represent:
1 - kitchen machine;
2 - mixing cup;
3 - mixing means;
4 - container;
5 - dispensing means.

### DETAILED DESCRIPTION

The more general and advantageous configurations of the present invention are described in the Summary of the invention. Such configurations are detailed below in accordance with other advantageous and/or preferred embodiments of implementation of the present invention.

In an inventive aspect of the kitchen machine of the present invention, it is configured so that the dispensing of food supplies from one container to the inside of the mixing cup is lagged in time from the dispensing of food supplies from at least one other container to the inside of the mixing cup. It thus provides of a pre-configured dispensing - and thus mixture - of ingredients (the food supplies) in the mixing cup.

In two alternative embodiments, the kitchen machine is configured so that food supplies contained in each container are dispensable to the inside of the mixing cup under i) a same dispensing command or ii) a dispensing command to each of the containers.

In an advantageous embodiment, the time in which a dispensing command is issued is dependent on the cooking program, in particular on the duration of the cooking program. Thus, such solution provides that, based on the duration of a cooking program, a desired finishing time may be set, since the issuing of the dispensing command is dependent on said duration. Thus, a more efficient solution is provided, one that avoids finishing a cooking program prior of after a desired time.

Furthermore, optionally and under the scope of the described kitchen machine, the dispensing command contains information on the time in which the dispensing of food supplies contained within the container to the inside of the mixing is performed. Thus, in such case the kitchen machine is further configured so that between the receipt of the dispensing command and the actual dispensing by the dispensing means, a time period is provided. It may be the case where a user remotely sends a dispensing command but does not wish the program to initiate immediately. Such time period may be dependent on the time that a user wishes to have a desired cooking program finished and the time that such cooking program lasts.

In another inventive aspect of the kitchen machine, a cooking program starts after a first dispensing of food supplies from a container to the inside of the mixing cup, preferably such cooking program comprising activation of the mixing means and/or the heating means for predefined periods of time. Thus, the cooking program may initiate, be it through heating, mixing or any other available means, after the dispensing of the food supplies of a first container. The particulars of heating, mixing or any other available means and the associated predefined periods of time are dependent on each cooking program. Thus, it may be that all food supplies / ingredients are dispensed subsequently into the mixing cup or that operations, such as heating, mixing or any other available means, each with an associated predefined period of time, separate the several dispensing actions.

In yet another innovative aspect of the kitchen machine of the present invention, the containers are radially arranged around an axle, the set of containers being rotatable around such axle, the dispensing of food supplies from one container to the inside of the mixing cup being obtained by rotation and alignment of such container with the outlet of the dispensing means. Thus, the dispensing means - in particular the several containers therein comprised - are efficiently arranged in a rotational structure, around an axle, thereby efficiently providing the dispensing of each food supply into the mixing cup, in a compact manner.

Optionally, the kitchen machine further comprises a controllable gate arranged between the container and an outlet of the dispensing means, such controllable gate being able to open under receipt of said dispensing command, thereby providing said dispensing of food supplies to the inside of the mixing cup through an opening formed in the mixing cup.

In an embodiment providing higher closure efficiency, the mixing cup comprises a cover, such cover having the referred opening. Optionally, the cover further comprises an openable inlet, such inlet covering the opening formed in the cover and, when open, providing access between the outlet of the dispensing means and the opening of the cover.

Preferably, the kitchen machine comprises heating means, optionally provided in a base of the mixing cup.

The cooking program may start automatically or under receipt of a specific message. Specifically, the cooking program may be initiated:
- only under receipt of a subsequent command by the kitchen machine, such subsequent command consisting of a cooking program initiation command, or
- automatically.

In an advantageous embodiment, the dispensing means further comprise cooling means, the cooling means being so arranged that provide refrigeration of the container. Thus, maintenance of the conservation of the food supplies until the issue of the dispensing command is provided.

Preferably, the kitchen machine further comprises communication means, the communication means being configured to receive a remote message containing the dispensing command, the communication means preferably being wireless, more preferably a local area wireless network or a cellular network.

In an optional and alternative embodiment, the machine is further configured with a timer, such timer being able to be pre-set with a time limit and, under expiry of such time limit, the machine being further configured to issue the dispensing command, the machine further comprising a microcontroller which in turn comprises the timer.

Optionally, the mixing cup may have a substantially cylindrical or substantially tall truncated cone shape.

In an embodiment of the kitchen machine of the present invention, it comprises a mixing cup provided with mixing means and with heating means, the heating means being arranged in the base of the mixing cup. Both the heating means and the mixing means are electrically put into action - electrically operated. The mixing means typically consist of a mixer/stirrer, which provides stirring of ingredients inside the mixing cup or of a cutter - typically comprising a set of blades - which provides cutting of ingredients inside the mixing cup. Typically, the stirrer and the cutter are interchangeable.

The kitchen machine further comprises a base structure to which the mixing cup is attachable, such base structure comprising motion transmitting means which, when the mixing cup is attached to the base, are able to provide motion to the mixing means. Such motion transmitting means consist of an electric motor.

The kitchen machine enables the automatic preparation of food by means of automatic cooking programs with which it is configured, each cooking program comprising the activation of the mixing means and/or heating means for predefined periods of time. For instance, to the preparation of a simple recipe such as whipped cream may correspond the cooking program of - after the placing of cream inside the mixing cup, a mixer being provided inside the mixing cup - the activation of the mixing means/mixer for 2 minutes at a predefined speed of rotation of the mixer. More complex recipes/cooking programs will comprise several stages of activation and configuration of the mixing means and the heating means.

Furthermore, in such embodiment the kitchen machine comprises communication means, which typically comprise a Wi-Fi communication controller or a GPRS communication controller. Other wireless communication protocols are also suitable, as well as cabled communication protocols, such as Ethernet. However, for a higher portability of the kitchen machine, wireless protocols are preferred.

A message may be sent through a network - typically it is sent through the Internet - for instance from a device which is remote to the kitchen machine. Such remote device typically consists of a cell phone, configured with a computer program - an app - which provides the issue of messages to the kitchen machine. The addressing of a specific kitchen machine from the app may be provided, for instance under a unique ID of the kitchen machine.

The message may thus be routed through one or more servers. One or more of the servers may even be configured to provide control or register roles, such as registering the issue of a dispensing command from the app to the kitchen machine, and route the command only at the time that the user desires the dispensing command to be issued.

Such message, under the scope of the present invention will contain a dispensing command. Under the receipt of the dispensing command, the kitchen machine will provide the dispensing of food supplies to the inside of the mixing cup.

Thus, a user, which is remotely to the machine, may remotely instruct it to start a cooking program, provided that food supplies have been placed in one or more containers. The user of the remote device would have placed the food supplies inside the containers in advance.

The kitchen machine comprises dispensing means, which are provided with one or more containers - typically more than one, to allow the preparation of complex recipes. The kitchen machine is configured so that the dispensing of food supplies from one container to the inside of the mixing cup is lagged in time from the dispensing of food supplies from at least one other container to the inside of the mixing cup, so allowing the ingredients/food supplies inside the containers to be dispensed to the inside of the mixing cup according to a cooking program, thus providing a recipe.

Furthermore, the initiation of the dispensing/cooking program may also be provided with a predefined time of start. For instance, the user may, at 12:00, configure the machine to have a cooking program finished at 20:00. If such cooking program takes 30 min to be prepared, the machine would then initiate the dispensing, thus internally issuing the dispensing command, at 19:30. The dispensing command thus contains information on the time in which the dispensing of food supplies contained within the container to the inside of the mixing cup is performed. Furthermore, the kitchen machine is provided with a timer, such timer being pre-set with a time limit (19:30) and, under expiry of such time limit, the machine issuing the dispensing command.

With regard to the physical construction of the machine, a controllable gate is arranged between an outlet of the dispensing means and an opening formed in the mixing cup, such controllable gate being able to open under receipt of the dispensing command, thereby providing the dispensing of food supplies to the inside of the mixing cup. The kitchen machine may comprise a single outlet, and a controllable gate for each one of the containers.

In such embodiment, the mixing cup comprises a cover, the cover having the referred opening and an openable inlet - such as a lid -, the lid covering the opening formed in the cover and, when open, providing access between the outlet of the dispensing means and the opening of the cover.

Thus, the dispensing means comprise an axle around which the several containers are radially arranged, the set of containers being rotatable around such axle, the dispensing of food supplies from one container to the inside of the mixing cup being obtained by rotation and alignment of such container with the outlet of the dispensing means. The mixing cup may have a substantially cylindrical shape, the cover thus having a circular section. The opening is centrally formed in such circular section. The dispensing means may also have a substantially cylindrical shape, the outlet being also centrally provided in a lower base, and thus easy to couple to the opening of the cover.

Under the issue of the dispensing command and provided the lag in time for the dispensing of the several containers and food supplies contained therein, the several controllable gates will open and allow the food supplies/ingredients to be dispensed to the inside of the mixing cup.

Thus, and under the provision of a cooking program which corresponds to a recipe, such recipe may be automatically prepared, with the sequential dispensing of food supplies / ingredients from the several containers.

Moreover, and in order to enable the storage of food supplies with higher perishable properties, cooling means are provided, arranged in such a way that provide refrigeration of each container.

The cooling means may thus be displaced in such a way that cover at least a larger outer surface of the container, or be provided within the container.

As referred, the kitchen machine - including all of its several described components - is electrically powered, be it through a mains power supply or energy storage means, such as a battery.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Kitchen machine **characterised in that** it is electrically ran and comprises i) a mixing cup, ii) mixing means provided in the mixing cup, iii) at least one container suitable to contain food supplies and iv) dispensing means, the dispensing means and the mixing cup being such that the food supplies contained within the container are dispensable to the inside of the mixing cup under a dispensing command received by the kitchen machine.

2. Kitchen machine according to the previous claim wherein it comprises more than one container.

3. Kitchen machine according to any of the preceding claims wherein it is configured to, subsequently to the dispensing of food supplies from a container into the mixing cup, initiate a cooking program, preferably such cooking program comprising activation of mixing means and/or heating means for predefined periods of time.

4. Kitchen machine according to any of the claims 2-3, wherein it is further configured so that the dispensing of food supplies from one container to the inside of the mixing cup is lagged in time from the dispensing of food supplies from at least one other container to the inside of the mixing cup.

5. Kitchen machine according to the previous claim wherein a cooking program starts after a first dispensing of food supplies from a container to the inside of the mixing cup, preferably such cooking program comprising activation of the mixing means and/or the heating means for predefined periods of time.

6. Kitchen machine according to any of the claims 4-5 wherein the dispensing means further comprise an axle around which the containers are radially arranged, the set of containers being rotatable around such axle, the dispensing of food supplies from one container to the inside of the mixing cup being obtained by rotation and alignment of such container with the outlet of the dispensing means.

7. Kitchen machine according to any of the claims 3-6 wherein the time in which a dispensing command is issued is dependent on the cooking program, in particular on the duration of the cooking program and, preferably, the dispensing command contains information on the time in which the dispensing of food supplies contained within the container to the inside of the mixing cup is performed.

8. Kitchen machine according to any of the preceding claims wherein it further comprises a controllable gate arranged between the container and an outlet of the dispensing means, such controllable gate being able to open under receipt of said dispensing command, thereby providing said dispensing of food supplies to the inside of the mixing cup through an opening provided in the mixing cup.

9. Kitchen machine according to any of the preceding claims wherein the mixing cup comprises a cover, such cover having the referred opening and, preferably, the cover further comprises an openable inlet, such inlet covering the opening formed in the cover and, when open, providing access between the outlet of the dispensing means and the opening of the cover.

10. Kitchen machine according to any of the preceding claims wherein it further comprises heating means, preferably provided in a base of the mixing cup.

11. Kitchen machine according to any of the claims 3-10 wherein said cooking program is initiated:
- only under receipt of a subsequent command by the kitchen machine, such subsequent command consisting of a cooking program initiation command, or
- automatically.

12. Kitchen machine according to any of the preceding claims wherein it further comprises cooling means, the cooling means being so arranged that provide refrigeration of each container.

13. Kitchen machine according to any of the preceding claims wherein it further comprises communication means, the communication means being configured to receive a remote message containing the dispensing command, the communication means preferably being wireless, more preferably a local area wireless network or a cellular network.

14. Kitchen machine according to any of the preceding claims wherein it is further configured with a timer, such timer being able to be pre-set with a time limit and, under expiry of such time limit, the machine being further configured to issue the dispensing command, the machine further comprising a microcontroller which in turn comprises the timer.

15. Method for automating a cooking program in a kitchen machine wherein it is implemented by the kitchen machine of any of the preceding claims, and comprising the steps of:
- issuing a dispensing command to the dispensing means,
- under receipt of such command in the kitchen machine, dispensing, by the dispensing means, of the food supplies contained in the container into the mixing cup, through the outlet of the dispensing means and the opening of the mixing cup,
- initiating a cooking program in the kitchen machine, preferably such cooking program comprising activation of the mixing means and/or the heating means comprised by the mixing cup, for predefined periods of time,
preferably, the kitchen machine comprising more than one container, each container having a different food supply.
